# EUROPÄISCHE PATENTSCHRIFT

(11) **EP 0 786 437 B1**
(45) Veröffentlichungstag und Bekanntmachung des Hinweises auf die Patenterteilung: **16.09.1998**
(21) Anmeldenummer: 97100867.7
(22) Anmeldetag: 21.01.1997
(51) Int. Cl.: C03B 29/08

(54) **Vorrichtung zur konvektiven Erwärmung von auf einem Rollengang geführten Glasscheiben**
Apparatus for convective heating glass sheets transported on a roller conveyor
Appareil de chauffage par convection de feuilles de verre transportées sur un convoyeur à rouleaux

(30) Priorität: 23.01.1996 DE 19602184
(43) Veröffentlichungstag der Anmeldung: 30.07.1997
(73) Patentinhaber: Ingenieurgemeinschaft WSP Prof. Dr.-Ing. C.Kramer Prof. H.J. Gerhardt, M.Sc., 52074 Aachen (DE)
(72) Erfinder: Kramer, Carl, Prof.-Dr.-Ing., 52076 Aachen (DE)
(74) Vertreter: Marx, Lothar, Dr.

(56) Entgegenhaltungen:
- EP-A- 0 249 361
- EP-A- 0 448 983
- EP-A- 0 649 821
- US-A- 5 085 580

## Beschreibung

Die Erfindung betrifft eine Vorrichtung, mit welcher auf einem Rollengang geführte Glasscheiben konvektiv, also durch Beblasen mit Heißgas, erwärmt werden. Solche Vorrichtungen finden als sogenannte Vorspannöfen bei der Herstellung von thermisch vorgespanntem Glas Verwendung. Weil bei der konvektiven Erwärmung im Gegensatz zur üblichen Erwärmung nur durch Strahlung die Beschaffenheit der Glasoberfläche kaum von Bedeutung ist, hat sich die konvektive Erwärmung gegenüber der Strahlungserwärmung gerade in letzter Zeit als besonders vorteilhaft erwiesen, da mehr und mehr beschichtete oder bedruckte Gläser vorgespannt werden müssen.

Eine äußerst vorteilhafte Strömungsführung für einen solchen Konvektionsofen ist aus dem Deutschen Patent DE 40 10280 bekannt. Eine weitere Vorrichtung, allerdings ohne die in vorteilhafter Weise wechselseitig angeordneten Düsenrippen, ist in der Offenlegungsschrift Aktenzeichen DE 4 336 364 beschrieben. Bei diesen Vorrichtungen nach dem Stand der Technik werden die Düsen zur Beblasung der auf dem Rollengang geführten Glasscheiben an der Unterseite in den Lücken zwischen den Rollen und auf der Oberseite spiegelbildlich zu den unteren Düsen angeordnet. Da auf der Oberseite wegen des Fehlens der Rollen mehr Platz zur Verfügung steht, werden die Düsenrippen an der Oberseite üblicherweise breiter ausgeführt. Durch die Anordnung der unteren Düsenrippen zwischen den Rollen wird der verbleibende Freiraum eingeschränkt. Wenn beim Produktionsbetrieb, z. B. bedingt durch einen Glasfehler oder eine Kantenbeschädigung, Teile von Glasscheiben abbrechen, so können sich diese zwischen Düsenrippen und Rollen verklemmen und auf dem Rollengang bewegte Scheiben blockieren. Die Folge eines Scheibenbruches ist dann ein längerer Produktionsstillstand, da zum Entfernen der bereits erweichten und verformten Bruchstücke der Ofen in der Regel erst abgekühlt werden muß. Durch das Verklemmen von Scheiben zwischen Rollen und Düsen können auch die kostspieligen Keramik-Ofenrollen beschädigt werden. Außerdem wird durch die Notwendigkeit, einerseits den Einbauraum für die Düsen zu bieten und andererseits noch genügend Rückströmfläche für die mit den Düsen auf die Scheibenunterseite aufgeblasene Gasströmung zu schaffen, der Abstand zwischen den Rollen und damit auch bei vorgegebenem Rollendurchmesser die Rollenteilung auf ein nicht zu unterschreitendes Mindestmaß begrenzt. Gerade bei der Erwärmung von Glas ist es aber wichtig, die Rollenteilung im Ofen so klein wie möglich zu halten, um die Durchbiegung der durch Erwärmung über die Transformationstemperatur erweichten Scheiben gering zu halten und die besonders bei Reversieröfen auftretenden, die Optik der Scheiben verschlechternden Ofenwellen zu vermeiden.

Die Erfüllung der beschriebenen Anforderungen in Verbindung mit einem hohen konvektiven Wärmeübergang infolge Düsenströmung ist mit dem derzeit bekannten Stand der Technik nicht möglich. Die vorliegende Erfindung zeigt hier eine äußerst vorteilhafte Lösung auf.

Die beschriebene Aufgabe wird nach der Erfindung durch einen Rollenherdvorspannofen nach Anspruch 1 gelöst. Die Düsenrippen zur Beblasung der Scheibenunterseite sind mittig unter den Rollen angeordnet, wobei die Breite der Düsenrippen kleiner, gleich oder nur geringfügig größer ist als der Rollendurchmesser, wodurch der Freiraum zwischen den Rollen, in vertikaler Projektion betrachtet, völlig oder nahezu völlig frei bleibt und die Strahlströmung zur Beblasung der Scheibenunterseite unter vorzugsweiser Nutzung des Wandstrahl- oder auch Coanda-Effektes auf mindestens einer Seite der Rolle, unter welcher sich die Düsenrippe befindet, auf den Scheibenbereich zwischen dieser Rolle und der bzw. den benachbarten Rolle(n) geleitet wird.

Durch diese erfindungsgemäße Lösung werden die vorgeschriebenen gravierenden Nachteile insgesamt vermieden. Es steht nämlich der gesamte Freiraum zwischen den Rollen für herabfallende Bruchstücke von Glasscheiben zur Verfügung. Scherben können sich nicht mehr zwischen Düsenrippen und Rollen verklemmen. Die Rollenteilung kann selbst bei großer Arbeitsbreite und folglich großem Rollendurchmesser gering gehalten werden, mindestens so gering wie bei einem vergleichbaren Strahlungsofen, da wegen der vergleichsweise hohen konvektiven Wärmeübertragung der Freiraum zwischen den Rollen nicht mit Rücksicht auf den Wärmeeintrag in die Scheibe durch Strahlung von den unter den Rollen befindlichen Strahlungsheizeinrichtungen bemessen werden muß.

Bevorzugte Ausführungsformen des erfindungsgemäßen Rollenherdvorspannofens werden in den Unteransprüchen beschrieben.

Zusätzlich zu dem erfindungsgemäßen funktionellen Vorteil der, von oben betrachtet, im Windschatten unter den Rollen angeordneten unteren Düsenrippen weist der Vorspannofen nach der Erfindung noch weitere wesentliche erfindungsgemäße Vorteile auf, die insbesondere für den wirtschaftlichen Betrieb sehr wesentlich sind. So kann der Ofen sowohl elektrisch als auch indirekt mit Gas beheizt werden, wobei nach der Erfindung gasbeheizte Strahlheizrohre in den geräumig bemessenen Rückstromraum in der Ofenunterschale unterhalb und in der Ofenoberschale oberhalb der Düsenrippen eingebaut werden. Die bekannten gasbeheizten Vorspannöfen haben, wie z. B. in der US-PS 5,032,163 beschrieben, alle eine direkte Gasbefeuerung, wodurch die Verbrennungsgase in den Ofenraum und damit auch in Kontakt mit den zu erwärmenden Glasscheiben gelangen. Dies kann besonders bei beschichteten Gläsern zu schädlichen oder unzulässigen Veränderungen der Schichten führen. Bei der erfindungsgemäßen indirekten Gasbeheizung mit Strahlheizrohren, welche die im Rohrinnenraum geführten Verbrennungsgase gegenüber dem Ofeninnenraum gasdicht abschließen, ist dieser Nachteil ausgeschlossen.

Bei Elektrobeheizung werden die Heizregister auf der Saugseite der zur Heißgasumwälzung verwendeten Ventilatoren angeordnet, wobei zumindest die Heizregister für die Ofenunterschale durch die Einbauöffnung des jeweiligen Heizgasumwälzventilators zugänglich sind und ein- und ausgebaut werden können. Diese Lösung ist auch von großem funktionellen Vorteil, da die Strömungsvergleichmäßigung und die Entwicklung des Druckrückgewinnes im Druckstutzen des Heißgasventilators nicht mehr durch ein üblicherweise druckseitg eingebautes Heizregister beeinträchtigt wird. Folglich lassen sich mit gleichem strömungstechnischem Aufwand höhere Düsenaustrittsgeschwindigkeiten und damit höhere Wärmeübergänge erzielen.

Eine weitere sowohl betriebstechnisch als auch funktionell wichtige Verbesserung wird beim Vorspannofen nach der Erfindung durch die Luftkühlung der Ofenwellen im Bereich zwischen Rollenlager und Ofenwand erzielt. Dies ist gegenüber dem Stand der Technik äußerst vorteilhaft, da bei Vorspannöfen mit konvektiver Wärmeübertragung durch intensive Gasumwälzung, bedingt durch die erforderlichen vergleichsweise hohen Strömungsgeschwindigkeiten an den Durchführungen der Ofenrollen durch die Ofenwand Heißgas aus dem Ofen austritt und die Wellenenden mit Lagerung unzulässig erwärmt, wodurch Betriebsstörungen infolge Verklemmen oder Verzug des Antriebssystems infolge ungleichmäßig verteilter und zu hoher Temperatur auftreten können. Erfindungsgemäß wird dies vermieden, indem der Lagerbalken zur Kühlluftführung und Kühlluftverteilung genutzt wird und an jeder Lagerstelle mindestens ein Düsenstrahl derart auf das jeweilige Wellenende gerichtet wird, daß dieses unter Nutzung des Coanda-Effektes von dem Strahl bzw. den Strahlen umspült wird.

Die Erfindung wird im folgenden unter Zuhilfsnahme der Figuren 1 bis 5 beschrieben. Beispielhafte Ausführungsformen werden erläutert.

Es zeigen:
**Figur 1** einen Querschnitt
**Figur 2** eine Seitenansicht
**Figur 3** eine Draufsicht mit horizontalem Teilschnitt eines Vorspannofens nach der Erfindung mit Elektrobeheizung.
**Figur 4** zeigt eine Variante mit indirekter Gasbeheizungmittels Strahlheizrohren, dargestellt im Ofenquerschnitt.
**Figur 5** zeigt eine Ansicht und
**Figur 6** den zugehörigen Querschnitt einer Wellenlagerung mit Luftkühlung durch Düsenstrahl.
**Figur 7** zeigt Details des erfindungsgemäßen Düsensystems in einer Querschnittsdarstellung.

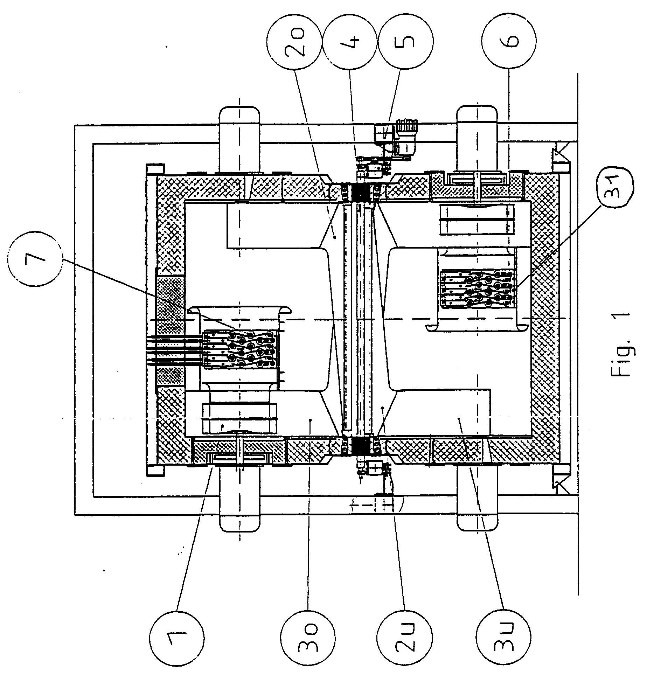

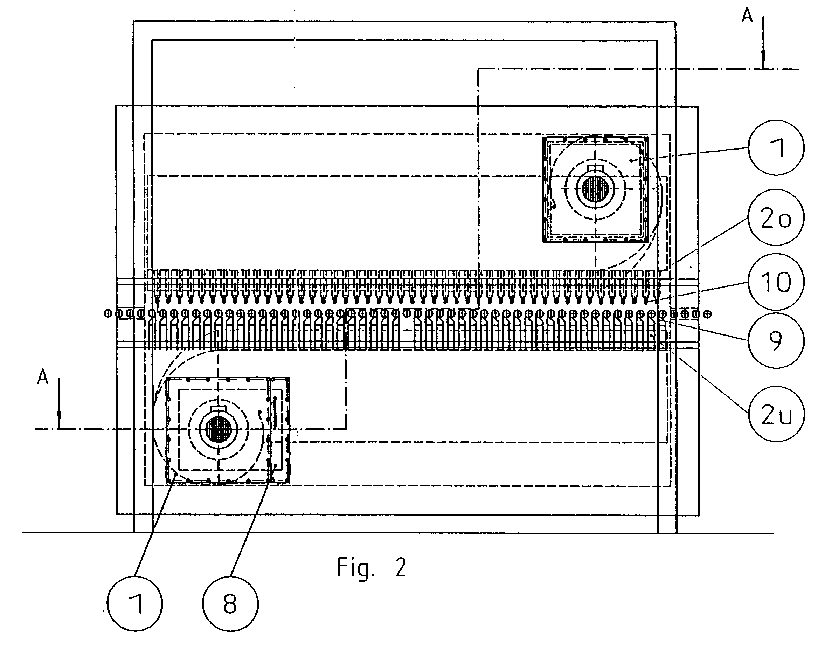

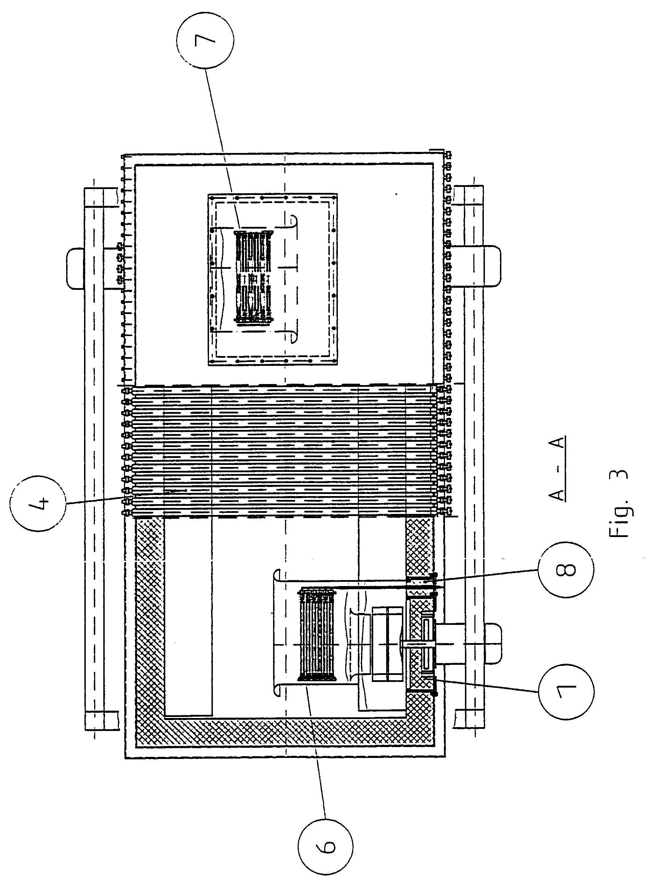

Wie aus Figur 1 ersichtlich, entspricht die Anordnung der Ventilatoren 1, die mit Stopfen in die Ofenseitenwande eingesetzt sind, die Anordnung der unteren und oberen Strömungskanäle 3u, 3o sowie die Anordnung der unteren und oberen Düsenrippen 2u, 2o der vorteilhaften Ausführungsform, die aus DE 40 10 280 bekannt ist. Als wesentliche Verbesserung gegenüber dieser Ausführungsform sind jedoch nunmehr bei der Variante mit elektrischer Beheizung die unteren Heizregister 6 und die oberen Heizregister 7 jeweils auf der Saugseite vor den Ventilatoren untergebracht. Dabei ist für das obere Heizregister ein einfacher Ausbau durch die Ofendecke möglich. Besonders vorteilhaft ist, daß, im Gegensatz zur bekannten Ausführungsform, für die Heizregistermontage der Druckkanal nicht durchbrochen und natürlich auch wieder abgedichtet werden muß. Dies ist insbesondere bei einem Hochkonvektionsofen, bei dem trotz der hohen Temperaturen relativ hohe Gasdrücke in den Luftverteilkästen herrschen, von Vorteil, da bereits die kleinste Leckage zu einem Einblasen von Heißgas in die Wärmeisolierung der Ofenwände führt. Beim unteren Heizregister 6 wird eine zusätzlich Öffnung dadurch vermieden, daß der Ausbau des Heizregisters, wie in den Figuren 2 und 3 dargestellt, durch die ohnehin für die Montage des Ventilators 1 erforderliche Öffnung erfolgt. Das Heizregister ist mit einem zusätzlichen Stopfen 8 ausgestattet, der in vorteilhafter Weise auch zur Durchführung der elektrischen Anschlüsse dienen kann.

Zum Ein- und Ausbau der Heizregister sind Führungsflächen 31 vorgesehen. Diese Führungsflächen 31 sind parallel zur Ventilatorachse ausgerichtet.

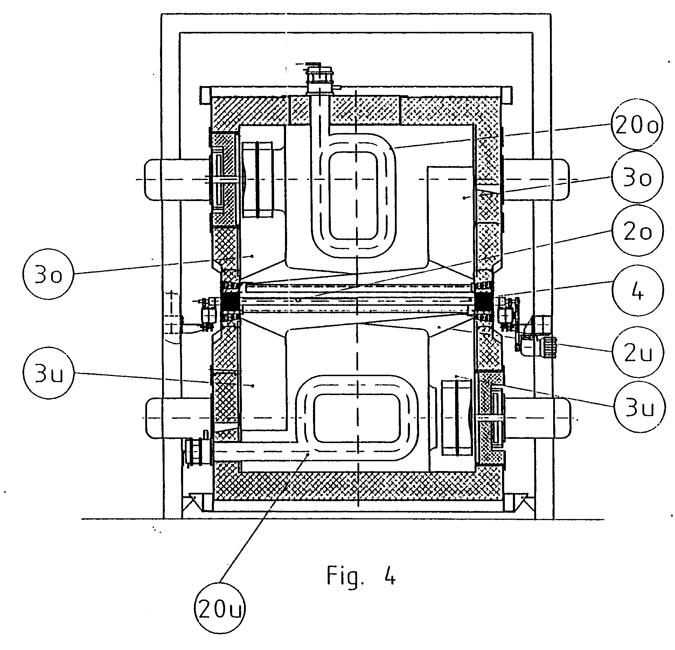

Bei der indirekt gasbeheizten Ausführungsform des erfindungsgemäßen Vorspannofens, vergleiche Figur 4, werden vorzugsweise P-förmige Strahlheizrohre in denen zwecks besserer Verbrennungswärmenutzung das Abgas rezirkulieren kann, eingesetzt. Zwischen oberen und unteren Strömungskanälen 3o, 3u und oberhalb der oberen bzw. unterhalb der unteren Düsenrippen 2o bzw. 2u steht bei der vorteilhaften Bauform des Vorspannofens ausreichend Einbauraum zur Verfügung.

Die oberen Strahlheizrohre 20o lassen sich einfach nach Strömungskanal aus dem Ofenunterteil gezogen. Zur Montage dient in üblicher Weise ein entsprechend ausgebildeter Stopfen (in der Figur 4 nicht dargestellt).

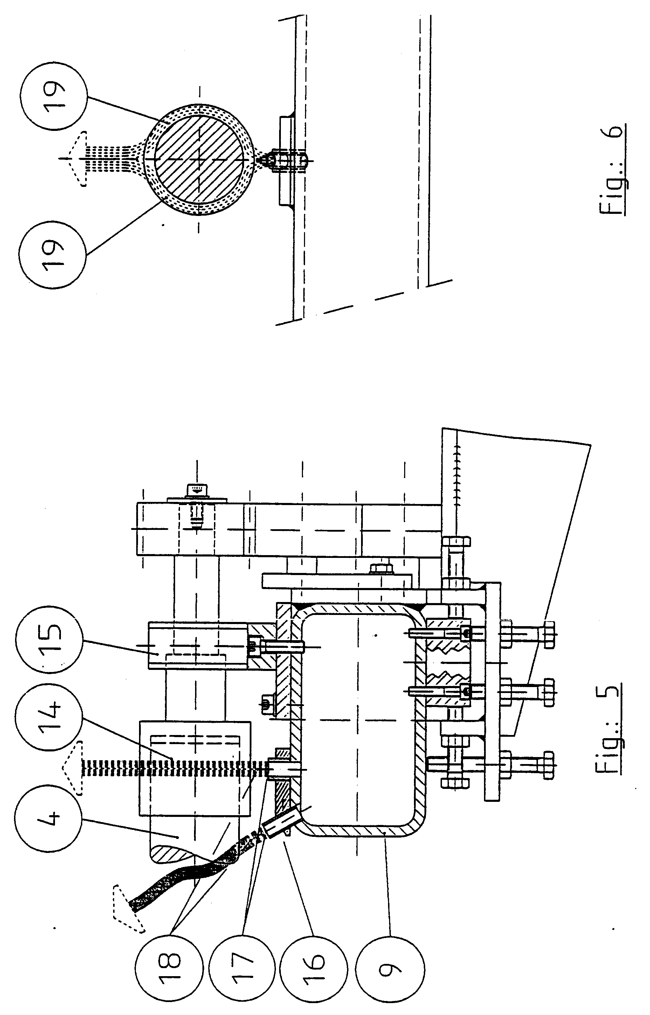

Die oberen und unteren Düsen sind in bekannter Weise oberhalb und unterhalb der den Ofenrollengang bildenden Keramikrollen 4 angeordnet. Der Rollengang ist seitlich in einer Stahlkonstruktion auf einem Lagerbalken 5 verlagert, auf welchem auch der Kettenantrieb für den Rollengang montiert ist. Da es sich bei dem Lagerbalken 5 ohnehin um ein Hohlprofil handelt, kann dieser Lagerbalken in zweckmäßiger Weise auch zu Luftkühlung der thermisch empfindlichen Rollenlagerung genutzt werden. Zu diesem Zweck wird mit einem entsprechenden Radialventilator stirnseitig in den Lagerbalken 5 Luft eingeblasen, vergleiche Figuren 5 und 6. Unterhalb der Rollen 4 ist der Lagerbalken mit Düsenöffnungen 18 versehen, durch welche ein Luftstrahl vorteilhaft in Richtung der wirkenden Thermik senkrecht von unten nach oben auf die Rollen 4 bzw. die Metallkappen 14 an den Rollenenden gerichtet wird. Dieser Luftstrom hat den Vorteil, nach Auftreffen auf der zylindrischen Rollenoberfläche einen die Rollen nahezu ablösungsfrei umschließenden wandstrahl 19 zu bilden, der sich, da der Strahl von unten mittig auf die Rolle auftrifft beim Abströmen der Rolle wieder nahezu vereinigt. Auf diese Art und Weise wird gerade in dem empfindlichen Bereich der Rollenkappen für eine effiziente Kühlung gesorgt, so daß die gesamte Lagerstelle auch bei einem mit sehr hoher Temperatur betriebenen Ofen Raumtemperatur kaum überschreitet. Dies ist besonders wichtig für einen Konvektionsofen, in dem, gemäß der Natur der Sache, hohe Strömungsbewegungen herrschen und bei dem durch längeren Produktionsbetrieb bedingter Verschleiß zu Leckagen im Bereich der Wellendurchführungen durch die Ofenwand führen kann. Trotz solcher Leckagen bleibt der auf diese Weise erfindungsgemäß vorteilhaft gekühlte Bereich der Wellenverlagerung vor unzulässiger Erwärmung geschützt und damit dauerhaft betriebssicher.

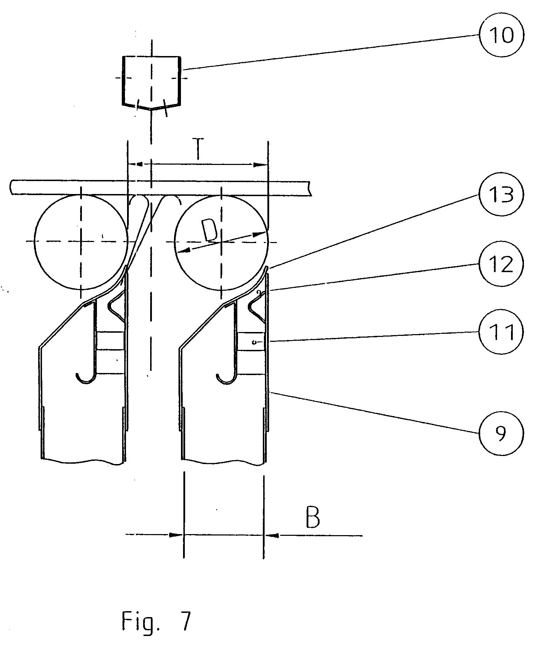

Details der erfindungsgemäßen unteren Düsenkappen sind in Figur 7 in einem Querschnitt dargestellt. Gezeigt ist eine Ausführungsform, bei welcher sich ein Düsenschlitz 12 nur auf einer Seite einer Rolle befindet. Da die Düsenrippen von der Seite mit Heißgasströmung versorgt werden, ist es vorteilhaft, in den Düsenkappen noch Leitgitter 11 zur Strömungsrichtung anzuordnen. Die Düsenbreite entspricht, wie in der Figur gezeigt, dem Rollendurchmesser. Dadurch bleibt der gesamte Freiraum zwischen den Rollen frei. Die erforderliche Umlenkung des Strahles, der als Schlitzstrahl mit Teilschlitzlängen, die jeweils ein ausreichendes Vielfaches der Schlitzbreite ausmachen, aus der Düsenöffnung 12 austritt, wird mit Hilfe der als Führungsfläche 13 dienenden oberen Begrenzungsfläche der Düsenaustrittsöffnung derart gerichtet, daß er, wie in Figur 5 schematisch dargestellt, etwa mittig auf die Glasscheibe auftrifft. Diese Führungsfläche ist vorzugsweise gewölbt, um zur Strahlrichtung den Coanda-Effekt zu nutzen. Die mit einem Schlitzstrahl von 6 mm Breite, einem Rollendurchmesser von 80 mm Durchmesser bei einer Rollenteilung von 120 mm mit dieser Anordnung gemessenen Wärmeübergangsoeffizienten liegen bei Temperaturen der Meßplatte um 200°C und einer Düsenaustrittsgeschwindigkeit von nur 30 m/s bereits deutlich über 150 W/m²K. Der äußerst bedeutsame funktionelle Vorteil des neuen Düsensystems wird also ohne Verlust an Wärmeübergang und damit ohne Beeinträchtigung der Aufheizgeschwindigkeit erreicht. Die Kappen der oberen Düsen 10 entsprechen den bekannten Ausführungsformen. Es können sowohl Lochdüsen als auch Schlitzdüsen, als auch Kombinationen von Loch- und Schlitzdüsen verwendet werden.

## Patentansprüche

1. Rollenherdvorspannofen zur vornehmlich konvektiven Erwärmung von Glasscheiben mit Heißgasströmung mit unterhalb und oberhalb des Rollengangs angeordneten Düsenrippen (2o und 2u), **dadurch gekennzeichnet**, daß die unteren Düsenrippen (2u) mittig unter den Rollen angeordnet sind, die Breite der Düsenrippen (B) vom Rollendurchmesser (D) nur wenig abweicht, wodurch der gesamte oder nahezu der gesamte Freiraum zwischen den Rollen frei bleibt und die aus mindestens auf einer Seite der über der Düsenrippe befindlichen Rollen angeordneten Düsenöffnungen (12) austretende Strahlströmung zur Beblasung der Scheibenunterseite auf den Scheibenbereich zwischen den Rollen geleitet wird.

2. Rollenherdvorspannofen nach Anspruch 1, **dadurch gekennzeichnet**, daß zur Lenkung der aus den Düsenöffnungen (12) austretenden Strahlströmung der Coanda-Effekt an der in Bezug auf den Düsenstrahl konvex gewölbten oberen Begrenzungsfläche (13) der Düsenaustrittsöffnung genutzt wird.

3. Rollenherdvorspannofen nach einem der Ansprüche 1 und 2, **dadurch gekennzeichnet**, daß die Düsenöffnungen (12) Schlitzdüsen mit einem Verhältnis von Schlitzlänge zu strömungseffektiver Schlitzbreite größer 5 sind.

4. Rollenherdvorspannofen nach einem der Ansprüche 1 bis 3, **dadurch gekennzeichnet**, daß Düsenöffnungen nur auf einer Seite der über der Düsenrippe befindlichen Rolle angeordnet sind und diese Seite innerhalb des Ofenrollenganges wechselt.

5. Rollenherdvorspannofen nach einem der Ansprüche 1 bis 4, **dadurch gekennzeichnet**, daß - in Strömungsrichtung betrachtet - vor den Düsenöffnungen (12) Leiteinrichtungen zur Umlenkung der Düsenausströmung aus der Zuströmrichtung in den Düsenrippen in eine Richtung senkrecht zur Rollenachse angebracht sind.

6. Rollenherdvorspannofen nach einem der Ansprüche 1 bis 5 mit in den Ofenseitenwänden eingebauten Radialventilatoren, die oberhalb und unterhalb des Rollenganges jeweils zur Mitte des Ofens punktsymmetrisch angeordnet sind und jeweils in einen an der Längsseite der Ofenwand angeordneten Ausblaskanal einblasen, an den je Seite jeweils die Hälfte der oberen oder der unteren Düsenrippenangeschlossen sind, mit saugseitig vor der Radialventilatoren angeordneten elektrischen Heizregistern, **dadurch gekennzeichnet**, daß zumindest die unteren elektrischen Heizregister 6 einen Querschnitt senkrecht zur Durchströmungsrichtung aufweisen, der kleiner als der Querschnitt der Öffnungen in den Seitenwänden zum Einbau der Ventilatoren ist, und daß zum Ein- und Ausbau der Heizregister 6 Führungsflächen parallel zur Ventilatorachse vorgesehen sind.

7. Rollenherdvorspannofen nach einem der Ansprüche 1 bis 6, **dadurch gekennzeichnet**, daß zur Beheizung gasgefeuerte Strahlheizrohre vorgesehen sind, welche einen Eintritt von Verbrennungsgas in den Ofenraum ausschließen.

8. Rollenherdvorspannofen nach einem der Ansprüche 1 bis 7, **dadurch gekennzeichnet**, daß eine Kühlung der Rollen im Bereich zwischen Rollenlager (15) und ofenaußenwand für jedes Rollenende mittels mindestens einem zentrisch auf die Rollen gerichteten Luftstrahl (18) erfolgt, welcher die Rollen (4) oder die Rollenendkappen (14) unter Nutzung des Coanda-Effekts im Rollenquerschnitt der Strahlachse nahezu vollständig umspült.

9. Rollenherdvorspannofen nach Anspruch 8 **dadurch gekennzeichnet**, daß die Zufuhr der Kühlluft durch einen als Hohlprofil ausgeführten Lagerbalken (9) erfolgt.

## Claims

1. A roller-hearth tempering furnace for the predominantly convective heating of glass sheets by a hot gas flow including nozzle ribs arranged below (2u) and above (2o) the roller conveyor, **characterized in that** said lower nozzle ribs (2u) are arranged centrally under the rollers, the width of the nozzle ribs (B) deviates only slightly from the roller diameter (D), as a result of which the complete or near complete clearance between said rollers remains free and the jet stream emerging from at least one nozzle orifice (12) arranged on one side of said rollers provided above the nozzle ribs for jetting or blowing onto the underside of the glass sheet is directed to the region of the glass sheet between said rollers.

2. The roller-hearth tempering furnace as set forth in claim 1, **characterized in that** for guiding the jet stream emerging from said nozzle orifices (12) use is made of the Coanda effect at the upper limiting surface area (13) of the nozzle orifice curved convexly relative to the nozzle jet.

3. The roller-hearth tempering furnace as set forth in claim 1 or claim 2, **characterized in that** said nozzle orifices (12) are slit nozzles having a ratio of slit length to flow-effective slit width greater than 5.

4. The roller-hearth tempering furnace as set forth in any of the claims 1 to 3, **characterized in that** said nozzle orifices are arranged only on one side of the roller provided above said nozzle ribs and that this side alternates within the roller conveyor of the furnace.

5. The roller-hearth tempering furnace as set forth in any of the claims 1 to 4, **characterized in that** - as viewed in the direction of flow - guiding means are provided upstream of said nozzle orifices (12) for deflecting the nozzle emergant flow from the direction of supply flow in said nozzle ribs into a direction perpendicular to the roller axis.

6. The roller-hearth tempering furnace as set forth in any of the claims 1 to 5, including radial fans incorporated in the sidewalls of the furnace, each arranged above and below the roller conveyor point symmetrical to the centerpoint of the furnace and each blowing into a jetting passage arranged at the longitudinal side of the furnace wall to which, for each side, half of the upper or lower nozzle ribs is connected in each case, with electrical heating registers arranged at the suction end upstream of the radial fans, **characterized in that** at least the lower electrical heating registers (6) feature a cross-section perpendicular to the direction of through-flow which is smaller than the cross-section of the openings in the sidewalls for installing the fans and in that for installing and removing the heating registers (6) guiding surface areas are provided parallel to the fan axis.

7. The roller-hearth tempering furnace as set forth in any of the claims 1 to 6, **characterized in that** gas-fired radiant heating tubes are provided for heating which exclude any penetration of combustion gas into the furnace interior.

8. The roller-hearth tempering furnace as set forth in any of the claims 1 to 7, **characterized in that** cooling said rollers is effected in the region between roller bearing mounts (15) and the outer wall of the furnace for each roller end by means of at least one air jet (18) directed centrally on said rollers, said air jet enveloping said rollers (4) or the roller caps (14) almost completely in the roller cross-section of the jet axis when making use of the Coanda effect.

9. The roller-hearth tempering furnace as set forth in claim 8, **characterized in that** the supply of cooling air is effected through a bearing beam (9) configured as a hollow section.

## Revendications

1. Four de précontrainte à rouleaux pour le chauffage principalement par convection de feuilles de verre avec un courant de gaz chaud, comprenant des ailettes à buses (2o et 2u) disposées au-dessous et au-dessus du convoyeur à rouleaux, caractérisé en ce que les ailettes à buses inférieures (2u) sont disposées en position centrale sous les rouleaux, la largeur des ailettes à buses (B) diffère peu du diamètre (D) des rouleaux, de sorte que la totalité ou la quasi-totalité de l'espace libre situé entre les rouleaux demeure libre et le courant en jet sortant des orifices de buses (12) disposés au moins sur un côté des rouleaux situés au-dessus de l'ailette à buse pour balayer la face inférieure des feuilles est dirigée vers la zone des feuilles se trouvant entre les rouleaux.

2. Four de précontrainte à rouleaux selon la revendication 1, caractérisé en ce que, pour diriger le courant en jet sortant des orifices de buses (12), on utilise l'effet Coanda au niveau de la surface supérieure (13) qui délimite l'orifice de sortie des buses et qui présente une courbure convexe par rapport au jet des buses.

3. Four de précontrainte à rouleaux selon l'une des revendications 1 et 2, caractérisé en ce que les orifices de buses (12) sont des fentes dont le rapport entre la longueur et la largeur utile de passage est supérieur à 5.

4. Four de précontrainte à rouleaux selon l'une des revendications 1 à 3, caractérisé en ce que les orifices de buses ne se trouvent que sur un côté du rouleau situé au-dessus de l'ailette à buse et ce côté change à l'intérieur du convoyeur à rouleaux du four.

5. Four de précontrainte à rouleaux selon l'une des revendications 1 à 4, caractérisé en ce que des dispositifs déflecteurs situés avant les orifices de buses (12) - par rapport à la direction d'écoulement - sont prévus pour écarter le courant de sortie de la direction d'entrée dans les ailettes à buses et l'orienter dans une direction perpendiculaire à l'axe des rouleaux.

6. Four de précontrainte à rouleaux selon l'une des revendications 1 à 5, comprenant des ventilateurs radiaux qui sont encastrés dans les parois latérales du four, qui sont disposés respectivement selon une symétrie ponctuelle par rapport au centre du four au-dessus et au-dessous du convoyeur à rouleaux et qui refoulent chacun dans un canal de sortie qui est disposé sur le grand côté de la paroi du four et auquel est reliée, sur chaque côté, la moitié des ailettes à buses supérieures et inférieures, comprenant des registres de chauffage électriques disposés côté aspiration avant les ventilateurs radiaux, caractérisé en ce qu'au moins les registres de chauffage électriques inférieurs 6 possèdent, perpendiculairement au sens de passage, une section transversale qui est inférieure à la section transversale des ouvertures pratiquées dans les parois latérales pour encastrer les ventilateurs, et en ce que des surfaces de guidage sont prévues parallèlement à l'axe des ventilateurs pour la pose et la dépose des registres de chauffage 6.

7. Four de précontrainte à rouleaux selon l'une des revendications 1 à 6, caractérisé en ce que, pour le chauffage, il est prévu des tubes de chauffage par jet alimentés au gaz qui empêchent les gaz brûlés de pénétrer dans l'enceinte du four.

8. Four de précontrainte à rouleaux selon l'une des revendications 1 à 7, caractérisé en ce qu'un refroidissement des rouleaux est effectué, dans la zone située entre les paliers (15) des rouleaux et la paroi extérieure du four, à chaque extrémité des rouleaux au moyen d'au moins un jet d'air (18) qui est dirigé vers le centre des rouleaux et qui enrobe presque complètement les rouleaux (4) ou leurs coiffes d'extrémité (14) en utilisant l'effet Coanda sur la section des rouleaux située dans l'axe du jet.

9. Four de précontrainte à rouleaux selon la revendication 8, caractérisé en ce que l'alimentation en air de refroidissement s'effectue à travers une poutre porteuse (9) conçue sous la forme d'un profilé creux.
